# EUROPÄISCHE PATENTANMELDUNG

(11) **EP 0 564 942 A1**
(43) Veröffentlichungstag der Anmeldung: **13.10.1993**
(21) Anmeldenummer: 93105141.1
(22) Anmeldetag: 29.03.1993
(51) Int. Cl.: F16D 65/12

(54) **Bremsscheibe für Scheibenbremsen, insbesondere von Schienenfahrzeugen**

(30) Priorität: 08.04.1992 DE 4211868
(71) Anmelder: KNORR-BREMSE AG, 80710 München (DE)
(72) Erfinder: Schörwerth, Mathias, W-8192 Geretsried (DE); Wirth, Xaver, Dr., W-8045 Ismaning (DE)

(57) **Zusammenfassung**

Für eine Bremsscheibe mit auf einen Teilkreis angeordneten, achsparallelen Schrauben (15) zum Verbinden des Nabenkörpers (4) mit dem Reibring (9) sind von den Schrauben (15) durchsetzte Bundhülsen (18) vorgesehen, welche das Wärmedehnbewegungen relativ zu den Schrauben (15) ausführende Teil mit den Wärmebewegungen entsprechendem Spiel durchgreifen. Die Bundhülsen (18) sind vermittels der Schrauben (15) derart axial gegen das relativ zu ihnen unverschiebliche Teil verspannt, daß Auslenkungen der Schrauben (15) aus ihrer achsparallelen Lage ausgeschlossen sind. Zum Ermöglichen der Wärmebewegungen sind der Nabenkörper (4) und der Reibring (9) axial vermittels durch die Schrauben (15) gespannter Tellerfedern (20) axial verspannt.

## Beschreibung

Die Erfindung Betrifft eine Bremsscheibe für Scheibenbremsen, insbesondere von Schienenfahrzeugen, mit einem Nabenkörper mit einem in einer Flanschebene nach radialaußen auskragenden Nabenflansch, mit einem Reibring, dessen radial innerer oder äußerer Rand als ein den Nabenflansch radial überlappender, axial neben diesem befindlicher Reibringflansch ausgebildet ist, wobei der Naben- und/oder der Reibringflansch einen geschlossenen Flanschring oder in Umfangsrichtung gesehen voneinander getrennte Radialnocken aufweist, und mit achsparallel zur Bremsscheibe auf eineem Teilkreis angeordneten, den Naben- und den Reibringflansch durchsetzenden Schrauben zum Verbinden und axialen Verspannen von Naben- und Reibringflansch.

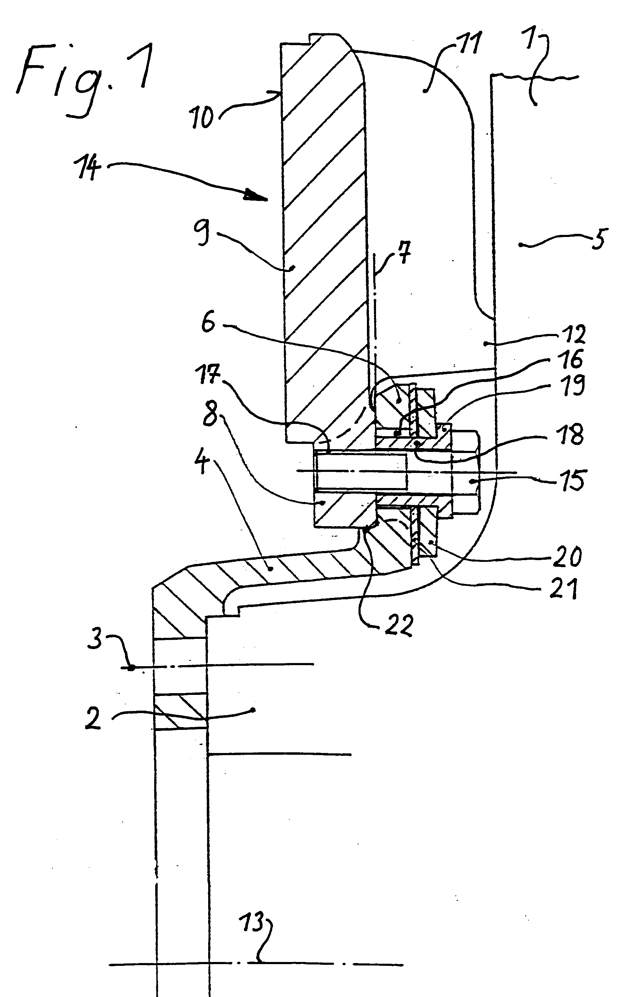

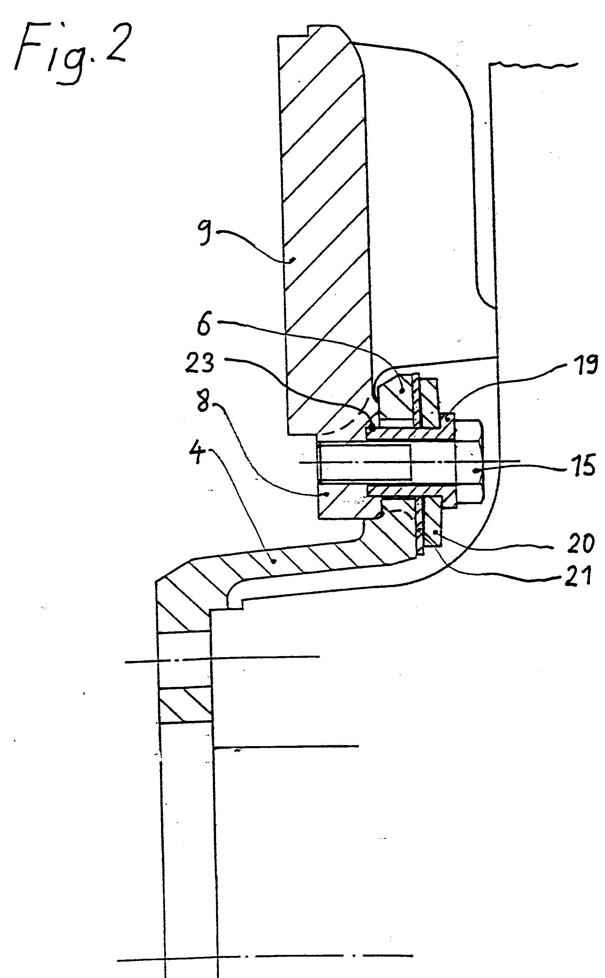

Eine derartige Bremsscheibe ist beispielsweise den Fig.1 und 2 der DE-A 26 20 623 entnehmbar. Es ist bekannt, daß bei diesen Bremsscheiben der Reibring sich infolge Erwärmung während Bremsvorgängen ausdehnt, während der Nabenkörper keine derartige Ausdehnung erfährt; zur Aufnahme bzw. zum Ausgleich der zwischen Reibring und Nabenkörper auftretenden Wärmedehungen ist eine Vielzahl von Konstruktionen bekannt. So zeigt beispielsweise die den eingangs genannten Merkmalen entsprechende DE-B 1 031 337 einen Reibring mit radial äußerem Flanschring, mit welchem die den Nabenflansch in radialen Führungsnuten durchsetzenden Schrauben verschraubt sind. Bei einer derartigen Konstruktion besteht jedoch die Gefahr, daß bei Wärmedehnungen die Schrauben ihre zur Bremsscheibe achsparallele Lage verlieren: Bei der Ausführung nach der erwähnten DE-B können beispielsweise die Schraubenköpfe ihre Lage relativ zum eine Wärmedehnungen erfahrenden Nabenflansch beibehalten, während ihr Verschraubungsabschnitt bei Wärmedehungen des Reibringes vom Reibringflansch nach radialaußen versetzt werden. Derartige Schraubenbeanspruchungen und -verformungen sind jedoch unbedingt zu vermeiden. Hierzu ist es beispielsweise aus der DE-A 28 28 137 bekannt, bei durchgehenden Verschraubungen sowohl die Schraubenköpfe wie die Muttern in sphärischen Lagerschalen zu lagern, wodurch sich die Schrauben ohne wesentliche Biege- und Scherbeanspruchungen aus ihren zur Bremsscheibe achsparallelen Lagen schwenken können. Diese Ausführung ist jedoch aufwendig und teuer und führt zudem zu Änderungen der Schraunbenvorspannungen. Zum Vermeiden des Schrägstellens der Schrauben infolge Wärmedehnungen ist es des weiteren bekannt, den Reibringflansch wärmedehnungsbeweglich zwischen den Nabenflansch und einem gegenüberliegenden angeordneten Spannring einzuspannen, wobei die Schrauben den Nabenflansch gegen den Spannring axial verspannen. Dabei müssen zusätzliche Mittel zur Drehmomentübertragung zwischen dem Nabenkörper und dem Spannring vorgesehen werden, wodurch sowohl der Bauaufwand wie die Montage erschwert werden. Bei innenbelüfteten Bremsscheiben kann zudem der Spannring die Kühlluftzufuhr zur Bremsscheibe erheblich behindern. Eine derartige Bremsscheibe ist in der DE-A 34 32 501 gezeigt.

Es ist Aufgabe der Erfindung eine Bremsscheibe der eingangs genannten Art Mit einfachen Mitteln derart auszugestalten, daß ein Beibehalten der Achsparallelität der Schrauben auch bei Wärmedehnungen des Reibringes stets gewährleistet ist, wobei jedoch Behinderungen eines gegebenenfalls vorgesehenen Kühlluftstromes für die Bremsscheibe vermieden werden.

Diese Aufgabe wird für eine den eingangs genannten Merkmalen entsprechende Bremsscheibe nach der Erfindung dadurch gelöst, daß Bundhülsen vorgesehen sind, deren jede von einer der Schrauben durchgriffen ist und ihrerseits mit zumindest, bezogen auf die Bremsscheibe, radialem Spiel den Naben- oder Reibringflansch durchsetzt, daß jede der Bundhülsen von der sie durchsetzenden Schraube mit einer ihrer axialen Stirnflächen plan gegen eine radiale Seitenfläche des von ihr nicht durchsetzten Reibring- oder Nabenflansches mit Vorspannung angepreßt ist, und daß jeder Bundhülse eine einerseits gegen diese oder ein gegen diese axial abgefangenes Teil und andererseits an der von der Bundhülse durchsetzten Naben- oder Reibringflansch abgestützte, vorgespannte Tellerfeder zum axialen Verspannen von Naben- und Reibringflansch zugeordnet ist, wobei die von der Schraube auf die Bundhülse ausgeübte Axialkraft höher als die Vorspannung der Tellerfeder ist.

Nach der weiteren Erfindung vorteilhafte Ausgestaltungsmerkmale für eine derartige Bremsscheibe sind den Unteransprüchen entnehmbar.

In der Zeichnung Fig.1 bis Fig.3 sind unterschiedliche Ausführungsbeispiele für nach der Erfindung ausgebildete Bremsscheiben in Schnittbildern dargestellt. Gleiche Teile sind dabei jeweils mit gleichen Bezugszahlen versehen.

In Fig.1 ist der axialeinseitige Umriß eines Schienenfahrzeugrades 1 von dessen Naben- und Radscheibenbereich 2 und 5 angedeutet. Mit dem Nabenbereich 2 des Schienenfahrzeugrades 1 ist vermittels nur durch ihre Achse angedeuteter Verschraubungen 3 ein Nabenkörper 4 der Bremsscheibe in bekannter Weise verschraubt. Ausgehend von der an einem Seitenflansch des Nabenbereiches 2 angeordneten Verschraubung 3 erstreckt sich der Nabenkörper 4 unter Einschluß einer Abwinklung zur Radscheibe 5 des Schienenfahrzeugrades 1 hin nach radialaußen, wobei er den Außenumfang des Nabenbereiches 2 mit Abstand übergreift. Mit axialem Abstand zur Radscheibe 5 endet der Nabenkörper mit einem nach radialaußen auskragenden Nabenflansch 6. Der Nabenflansch 6 kann als umlaufend geschlossener Flanschring ausgebildet sein, er kann jedoch auch in Umfangsrichtung gesehen voneinander getrennte Radialnocken aufweisen, wie es beispielsweise die Fig.1 der bereits erwähnten DE-A 26 20 623 zeigt. In einer radialen Flanschebene 7 liegt der Nabenflansch 6 axial auf seiner der Radscheibe 5 abgewandten Seite an einer entsprechenden Fläche eines Reibringflansches 8 an, welcher sich am radial inneren Rand eines Reibringes 9 befindet. Die der Radscheibe 5 abgewandte Radialfläche des Reibringes 9 ist als Reibringfläche 10 ausgebildet, gegen welche eine nicht dargestellte Bremsbacke anpreßbar ist. Der Radscheibe 5 zugewandt ist der Reibring 9 mit radialen Ventilationsflügeln 11 versehen, welche sich in einem Ringbereich 12 gegen die Radscheibe 5 axial abzustützten vermögen.

Der Reibringflansch 8 ist zweckmäßig in in Umfangsrichtung gesehen voneinander getrennte Radialnocken aufgegliedert, wie es ebenfalls die Fig.1 der bereits erwähnten DE-A 26 20 623 zeigt; hierdurch wird ein großer Eintrittsquerschnitt für Kühlluft geschaffen, welcher zwischen den Radialnocken in den von den Ventilationsflügeln 11 untergliederten Ringraum zwischen der Radscheibe 5 und dem Reibring 9 einzuströmen vermag, der Nabenflansch 6 ist hierzu ebenfalls in Umfangsrichtung in Radialnocken untergliedert auszubilden. In Abänderung hierzu kann jedoch insbesondere bei Ausbildung des Reibringes als unbelüfteter Vollring der Reibringflansch 8 wie zum Nabenflansch 6 erwähnt ebenfalls als unlaufend geschlossener Flanschring ausgebilet werden.

Der Nabenflansch 6 und der Reibringflansch 8 sind durch auf einem Teilkreis um die Achse 13 der aus den Nabenkörper 4 und dem Reibring 9 gebildeten Bremsscheibe 14 befindlichen, zur Achse 13 achsparallelen Schrauben 15 miteinander verbunden. Die Mit ihrem Kopfteil der Radscheibe 5 zugewandten Schrauben 15 durchgreifen Öffnungen 16 des Nabenflansches 6 und sind vermittels entsprechender Gewindebohrungen 17 mit dem Reibringflansch 8 verschraubt. Im Durchgriffsbereich durch den Nabenflansch 6 befinden sich auf den Schrauben 15 Bundhülsen 18, welche ebenfalls die Öffnungen 16 mit zumindest in Radialrichtung zur Achse 13 verlaufenden Spiel durchragen. Zwischen den Schrauben 15 und den Bundhülsen 18 ist nur geringes Radialspiel, beispielsweise ein Schiebesitz vorgesehen. Die Bundhülsen 18 liegen mit ihrer dem Reibringflansch 8 zugewandten Stirnfläche plan an der in der Flanschebene 7 liegenden Seitenwandung des Reibringflansches 8 an, andererseits enden die Bundhülsen 18 mit einem radial auskragenden Bund 19. Die Schrauben 15 liegen mit ihrem Kopf außenseitig am Bund 19 an und verspannen die Bundhülsen 18 axial gegen den Reibringflansch 8. Auf den Bundhülsen 18 sitzen ringförmige Tellerfedern 20, welche sich einerseits, radialinnern, gegen die innenseitige Wandung des Bundes 19 und andererseits, radialaußen, über Gleitscheiben 21 gegen die radscheibenseitige Wandung des Nabenflansches 6 abstützen. Die von den Schrauben 15 jeweils auf die Bundhülse 18 ausgeübte, in Andrückrichtung an den Reibringflansch 8 wirkende Axialkraft ist höher als die Vorspannung der zwischen den Bund 19 und dem Nabenflansch 6 eingespannten Tellerfeder 20. Die Summe der Vorspannungen der Tellerfeder 20 reicht dabei aus, den Nabenflansch 6 mit dem Reibringflansch 8 derart axial zu verspannen, daß während Bremsungen auf den Reibring 9 ausgeübte Bremsmomente durch den in der Flanschebene 7 bestehenden Reibschluß sicher auf den Nabenkörper 4 übertragen werden. Durch die Tellerfedern 20 wird ein bestimmter, definierter Reibschluß zwischen Naben- und Reibringflansch 6 und 8 gewährleistet, der auch bei Änderungen der Verschraubungskraft erhalten bleibt.

Es kann zweckmäßig sein, wenn die Schrauben 15 und die Bundhülsen 18 gleiche Querschnittsflächen aufweisen, sie somit im wesentlichen vergleichbar stark belastet werden
Im kalten Zustand der Bremsscheibe 14 nehmen deren Teile die aus Fig.1 ersichtlichen Lagen ein, wobei zwischen den Bundhülsen 18 und der radial äußeren Wandung der Öffnungen 16 ein zur Aufnahme von Wärmedehnungen des Reibringes 9 ausreichendes Radialspiel besteht. Wird während Bremsungen der Reibring 9 erhitzt und dehnt sich dementsprechend radial aus, so werden über den Reibringflansch 8 die Schrauben 15 entsprechend mitgenommen, d.h. bezogen auf die Achse 13 nach radialaußen versetzt, der Reibringflansch 8 gleitet dabei in der Flanschebene 7 unter Überwindung des Reibschlusses zum Nabenflansch 6 entsprechend nach radialaußen. Über die axialverspannten Bundhülsen 18 werden dabei die Schrauben 15 achsparallel zur Achse 13 gehalten, über die Bundhülsen 18 werden die Tellerfedern 20 und Gleitscheiben 21 mitgenommen und relativ zum Nabenflansch 6 nach radialaußen versetzt. Der Reibschluß zwischen Nabenflansch 6 über die Gleithülsen 21 zu den Tellerfedern 20 vermag den Kopfbereich der Schrauben 15 nicht derart festzuhalten, daß bei diesen Wärmedehnungen die Schrauben 15 aus der zur Achse 13 achsparallelen Lage gedrängt werden.

Bei nachfolgender Abkühlung des Reibringes 9 spielen sich entsprechend umgekehrte Vorgänge ab.

Beim vorstehend beschriebenen Ausführngsbeispiel kann während des Überwindens des Reibschlusses zwischen Nabenflansch 6 und Reibringflansch 8 bei Wärmedehnungs-Verschiebungen auch eine Relativverdrehung zwischen diesen beiden Flanschen und damit des Nabenkörpers 4 zur Reibscheibe 9 im Rahmen des Umfangsspieles der Bundhülsen 18 in den Öffnungen 16 erfolgen. Falls die Öffnugnen 16 als Bohrungen ausgebildet sind, wobei zwischen dem radial inneren Rändern von Bundhülse 18 und Öffnung 16, bezogen auf die Achse 13, im kalten Zustand der Bremsscheibe 14 ein höchstens geringes Spiel besteht, werden die vorstehend erwähnten Relativverdrehungen zwischen Nabenkörper 4 und Reibring 9 beim Erkalten des letzteren wieder zurückgestellt, auch erfolgt hierbei jeweils eine Neuzentrierung des Reibringes 9 zum Nabenkörper 4.

Sollen die vorstehend erwähnten Relativverdrehungen zwischen Nabenkörper und Reibring 9 mit Sicherheit ausgeschlossen werden, so ist zwischen beiden eine übliche Verdrehsicherung, beispielsweise vermittels einer Nut-Feder-Anordnung, in nicht dargestellter Weise vorzusehen. Zum Unterstützen des Zentrierens des Reibringes 9 relativ zum Nabenkörper 4 kann an letzterem, wie an sich bekannt, eine zylindrische Zentrierfläche 22 vorgesehen sein, auf welche sich der Reibring 9 bzw. dessen Reibringflansch 8 mit einer entsprechenden innenzylindrischen Gegenfläche im kalten Zustand des Reibringes 9 aufsetzt. In Abänderung zu den vorstehend beschriebenen Ausführungen ist es auch möglich, die Öffnungen 16 als zur Achse 13 radiale Langlöcher auszubilden, deren kleinere, in Umfangsrichtung liegende Weite dem Außendurchmesser der Bundhülsen 18 entspricht. Die Bundhülsen 18 werden hierbei gleitsteinartig in den Öffnungen 16 radial geführt, wodurch eine ständige Zentrierung des Reibringes 9 relativ zum Nabenkörper 4 gewährleitstet wird. Eine Relativverdrehung zwischen Reibring 9 und Nabenkörper 4 ist hierbei ausgeschlossen.

In weiteren, nicht dargstellten Abwandlungen ist es möglich, zwischen die Köpfe der Schrauben 15 und die Bunde 19 jeweils eine elastische Spannscheibe einzuspannen, welche kräftiger als die Tellerfeder 20 ist. Die Tellerfeder 20 kann in Einzelfedern aufgegliedert sein, die Gleitscheibe 21 kann gegebenenfalls entfallen und/oder in der Flanschebene 7 kann sich zwischen dem Nabenflansch 6 und dem Reibringflansch 8 ebenfalls eine Gleitscheibe befinden. Weiterhin müssen die Schrauben 15 nicht mit den Gewindebohrungen 17 in dem Reibringflansch 8 verschraubt sein, anstelle der Gewindebohrungen 17 können Durchgangsbohrungen vorgesehen sein, welche von den Schrauben 15 durchragt sind, wobei die axial den Reibringflansch 8 überragenden Schraubenenden mit Muttern verschraubt sind. Schließlich ist es auch möglich, die Anordnung umzukehren, derart, daß die Köpfe der Schrauben 15 radscheibenabgewandt an dem Reibringflansch 8 anliegen und ihr Gewindeabschnitt mit entsprechenden Gewindebohrungen in den zugleich als Mutter dienenden Bundhülsen verschraubt ist. Es können jedoch in Abänderung auch der Reibringflansch 8 den Öffnungen 16 entsprechende Öffnungen aufweisen, welche von den Bundhülsen 18 durchgriffen werden, und sich den Gewindebohrungen 17 entsprechende Gewindebohrungen im Nabenflansch 6 befinden bzw. mit den Schrauben 15 verschraubte Muttern können am Nabenflansch 6 anliegen. Der Nabenflansch kann anstatt radscheibenzugewandt auch radscheibenabgewandt am Reibringflansch 8 anliegen, unter Entfall des Schienenfahrzeugrades 1 kann der Nabenkörper 4 unmittelbar auf einer Welle gehaltert sein, wie es bei Wellenbremsscheiben üblich ist, der Reibringflansch 8 kann sich auch radialaußen am Reibring 9 befinden, wobei auch der Nabenflansch 6 entsprechend ausgebildet und verlagert werden muß, wie es beispielsweise prinzipähnlich aus der bereits erwähnten DE-B 1 031 337 ersichtlich ist.

Gemäß Fig.2 greift die Bundhülse 18 mit einem zylindrischen Ansatz bzw. einer Verlängerung in einen erweiterten Bohrungsabschnitt 23 des Reibringflansches 8 ein und liegt mit ihrer Stirnseite auf der Grundfläche dieses Bohrungsabschnittes 23 auf. Hierdurch wird die Halterung der Bundhülse 18 am Reibring 9 bzw. dessen Reibringflansch 8 verstärkt. Im übrigen entspricht die Ausführung der Bremsscheibe nach Fig.2 derjenigen nach Fig.1, wie auch die weiteren Bezugszahlen in Fig.2 verdeutlichen; da auch die Funktionen einander entsprechen, erübrigen sich weitere Erläuterungen zu Fig.2.

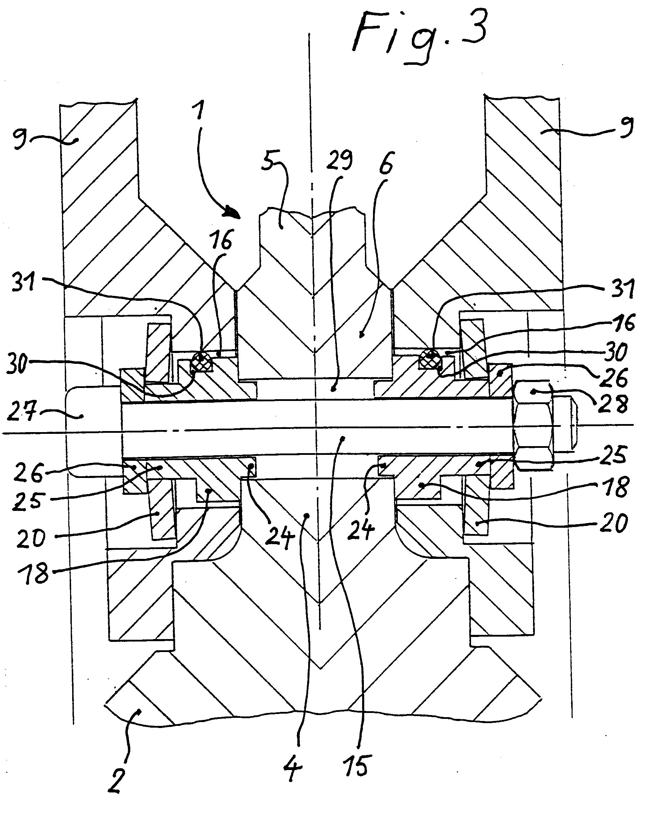

Die Fig.3 zeigt eine als beiderseitige Radbremsscheibe eines Schienenfahrzeuges ausgebildete Bremsscheibe mit zwei beiderseits der nur teilweise dargestellten Radscheibe 5 des Schienenfahrzeugrades 1 angeordneten Reibringen 9; der Nabenbereich 2 des Schienenfahrzeugrades 1 dient dabei in seinem Übergangsbereich zur Radscheibe 5 zugleich als Nabenkörper 4 bzw. spezieller als Nabenflansch 6. Die Schraube 15 durchragt den Nabenkörper 4 bzw.

Nabenflansch 6 in einer weiten und die beiderseitig an den Außenflächen dieses Nabenkörpers bzw. -flansches abgestützten Bundhülsen 18 in engen Bohrungen. Die Bundhülsen 18 sind jeweils beiderseitig mit zylindrischen Ansätzen 24 bzw. 25 versehen, die einander zugewandten Ansätze 24 beider Bundhülsen 18 greifen in die erwähnte, weite Bohrung 29 des Nabenkörpers 4 mit geringem Radialspiel ein und sind in dieser geführt. Auf den andersseitigen Ansätzen 25 beider Bundhülsen 18 ist je eine Tellerfeder 20 gelagert, deren jede sich an ihrem radialinneren Rand gegen eine Scheibe 26 abstützt. Die Scheiben 26 sind zwischen die Schraubenköpfe 27 bzw. die Muttern 28 der Schrauben 15 sowie die einander abgewandten, außenseitigen Stirnflächen der Bundhülsen 18 eingespannt. Die Bundhülsen 18 weisen gemäß Fig.3 etwa axialmittig einen Abschnitt größeren Durchmessers auf, mit welchem sie mit der Wärmedehnung der Reibringe 9 zumindest entsprechendem Spiel in die Öffnungen 16 der Reibringe 9 eingreifen. Radialaußenseitig stützen sich die Tellerfeder 20 gegen die Reibringe 9 in deren die Öffnungen 16 umgebenden Bereich ab und verspannen die beiden Reibringe 9 axial zum Nabenkörper 4 bzw. Nabenflansch 6.

Während des Betriebes der Bremsscheibe nach Fig.3 werden die Schrauben 15 vermittels der Bundhülsen 18 und des Nabenkörpers 4 parallel zur Achsrichtung der Bremsscheibe gehalten, während die Reibringe 9 Wärmedehnungen unter Überwinden des Reibschlusses zu den Seitenflanken des Nabenkörpers 4 bzw. Nabenflansches 6 ausführen können; die Funktion entspricht somit den vorstehend beschriebenen Ausführungsbeispielen.

Bei der beidseitigen Radbremsscheibe nach Fig.3 sind ebenfalls Ausführungsvarianten gemäß vorstehender Beschreibung zu Fig.1 und 2 möglich.

Zur Montageerleichterung sind beim Ausführungsbeispiel nach Fig.3 die Bundhülsen 18 in ihrem die Öffnungen 16 durchgreifenden Bereich mit nur in deren oberer Hälfte dargestellten Ringnuten 30 versehen, in welche elastische Zentrierringe 31 eingesetzt sind. Die mit radialer Vorspannung zwischen die Bundhülsen 18 und die Wandung der Öffnungen 16 eingespannten Zentrierringe 31 halten während des Montagevorganges bei noch unverspannten Tellerfeder 20 die Reibringe 9 zum Nabenkörper 4 zentriert. Nach dem Verspannen der Tellerfeder 20 durch Anziehen der Mutter 28 verlieren die Zentrierringe 31 ihre Montage-Erleichterungsfunktion, sie werden daher zweckmäßig aus einem Werkstoff gefertigt, welcher bei Erwärmungen, wie sie im Betrieb der Scheibenbremse auftreten, sich zersetzt, wodurch ein selbsttätiges Entfernen der Zentrierringe 31 während des Betriebes der Scheibenbremse erfolgt. Entsprechende Zentrierringe sind auch bei vorrangehend beschriebenen Bremsscheibenausführungen nach Fig.1 und 2 bzw. deren Varianten möglich.

### Bezugszeichenliste

- 1: Schienenfahrzeugrad
- 2: Nabenbereich
- 3: Verschraubung
- 4: Nabenkörper
- 5: Radscheibe
- 6: Nabenflansch
- 7: Flanschebene
- 8: Reibringflansch
- 9: Reibring
- 10: Reibringfläche
- 11: Ventilationsflügel
- 12: Ringbereich
- 13: Achse
- 14: Bremsscheibe
- 15: Schraube
- 16: Öffnung
- 17: Gewindebohrung
- 18: Bundhülse
- 19: Bund
- 20: Tellerfeder
- 21: Gleitscheibe
- 22: Zentrierfläche
- 23: Bohrungsabschnitt
- 24: Ansatz
- 25: Ansatz
- 26: Scheibe
- 27: Schraubenkopf
- 28: Mutter
- 29: Bohrung
- 30: Ringnut
- 31: Zentrierung

## Patentansprüche

1. Bremsscheibe für Scheibenbremsen, insbesondere von Schienenfahrzeugen, mit einem Nabenkörper (4) mit einem in einer Flanschebene (7) nach radialaußen auskragenden Nabenflansch (6), mit einem Reibring (9), dessen radial innerer oder äußerer Rand als ein den Nabenflansch (6) radial überlappender, axial neben diesem befindlicher Reibringflansch (8) ausgebildet ist, wobei der Naben- und/oder der Reibringflansch (6 bzw. 8) einen geschlossenen Flanschring oder in Umfangsrichtung gesehen voneinander getrennte Radialnocken aufweist, und mit achsparallel zur Bremsscheibe (14) auf einem Teilkreis angeordneten, den Naben- und den Reibringflansch (6 und 8) durchsetzenden Schrauben (15) zum Verbinden und axialen Verspannen von Naben- und Reibringflansch (6 und 8), dadurch gekennzeichnet, daß Bundhülsen (18) vorgesehen sind, deren jede von einer der Schrauben (15) durchgriffen ist und ihrerseits mit zumindest, bezogen auf die Bremsscheibe (14), radialem Spiel den Naben- oder Reibringflansch (6 oder 8) durchsetzt, daß jeder der Bundhülsen (18) von der sie durchsetzenden Schraube (15) mit einer ihrer axialen Stirnflächen plan gegen eine radiale Seitfläche des von ihr nicht durchsetzten Reibring- oder Nabenflanches (8 oder 6) mit Vorspannung angepreßt ist, und daß jeder Bundhülse (18) eine einerseits gegen diese (18) oder ein gegen diese axial abgefangenes Teil (Scheibe 26) und andererseits an der von der Bundhülse (18) durchsetzten Naben- oder Reibringflansch (6 oder 8) abgestützte, vorgespannte Tellerfeder (20) zum axialen Vorspannen von Naben- und Reibringflansch (6 und 8) zugeordnet ist, wobei die von der Schraube (15) auf die Bundhülse (18) ausgeübte Axialkraft höher als die Vorspannung der Tellerfeder (20) ist.

2. Bremsscheibe nach Anspruch 1, dadurch gekennzeichnet, daß sich zwischen der Tellerfeder (20) und dem diese abstützenden Naben- oder Reibringflansch (6 oder 8) und/oder zwischen dem Naben- und dem Reibringflansch eine Gleitscheibe (21) befindet.

3. Bremsscheibe nach Anspruch 1 oder 2, dadurch gekennzeichnet, daß die Tellerfeder (20) an einem Radialflansch (19) der Bundhülse (18) abgestützt ist.

4. Bremsscheibe nach Anspruch 1 oder 2, dadurch gekennzeichnet, daß die Tellerfeder (20) an einer von der Schraube (15) durchgriffenen und von dieser axial gegen die Bundhülse (18) angedrückten Scheibe (26) abgestützt ist.

5. Bremsscheibe nach einem oder mehreren der vorstehenden Ansprüche, dadurch gekennzeichnet, daß die Schraube (15) in Gewindeeingriff mit dem von der Bundhülse (18) nichtdurchgriffenen Naben- oder Reibringflansch (8) steht und mit ihrem Kopf an der diesem Naben- oder Reibringflansch (8) abgewandten Stirnfläche der Bundhülse (18) gegebenenfalls unter Zwischenordnung der Scheibe anliegt.

6. Bremsscheibe nach einem oder mehreren der Ansprüche 1 bis 4, dadurch gekennzeichnet, daß die Schraube in Gewindeeingriff zur Bundhülse steht und mit ihrem Kopf an dem von der Bundhülse nichtdurchgriffenen Naben- oder Reibringflansch anliegt.

7. Bremsscheibe nach einem oder mehreren der vorstehenden Ansprüche, gekennzeichnet durch eine Ausbildung mit zwei beiderseits des Nabenflansches (6) angeordneten, durch gemeinsame Schrauben und gesonderte Bundhülsen gehalterten Reibringen (9), insbesondere als beidseitige Radbremsscheibe von Schienenfahrzeugen.

8. Bremsscheibe nach Anspruch 7, dadurch gekennzeichnet, daß beidseitig einer den Nabenflansch (6) bildenden Radscheibenwurzel eines Schienenfahrzeugrades (1) je ein Reibring (9) gehaltert ist, daß beide Reibringe (9) von je einer Bundhülse (18) durchgriffen sind, daß jeder Bundhülse (18) eine Tellerfeder (20) zugeordnet ist, die auf jeweils einem zylindrischen Ansatz (25) der Bundhülse (18) gelagert und von einer Scheibe (26) axial abgestützt ist, die auf der Schraube (15) gelagert und axial zwischen die Bundhülse (18) und den Kopf (27) bzw. die Mutter (28) der Schraube (15) eingespannt ist (Fig.3).

9. Bremsscheibe nach einem oder mehreren der vorstehenden Ansprüche, dadurch gekennzeichnet, daß die Querschnittsflächen von Bundhülse (18) und Schraube (15) zumindest annähernd gleich sind.

10. Bremsscheibe nach einem oder mehreren der vorstehenden Ansprüche, dadurch gekennzeichnet, daß zwischen die Schraube (15) und die Bundhülse (18) eine Spannscheibe eingespannt ist, welche kräftiger als die Tellerfeder (20) ist.

11. Bremsscheibe nach einem oder mehreren der vorstehenden Ansprüche, dadurch gekennzeichnet, daß die Bundhülse (18) mit einem zylindrischen Ansatz (24) in die von der Schraube (15) durchsetzte, gegebenenfalls gestuft ausgebildete Bohrung (23) des gegen die Bundhülse (18) axial verspannten Naben- oder Reibringflansches (6 oder 8) eingreift.

12. Bremsscheibe nach einem oder mehreren der vorstehenden Ansprüche, dadurch gekennzeichnet, daß die von den Bundhülsen (18) mit Spiel durchgriffenen Bohrungen des Reibscheiben- oder Nabenflansches (8 oder 8) als zur Bremsscheibe (14) radiale Langlöcher ausgebildet sind, deren kürzere, in Umfangsrichtung liegende Weiten mit Schiebesitz dem Außendurchmesser der Bundhülsen (18) entsprechen.

13. Bremsscheibe nach einem oder mehreren der Ansprüche 1 bis 11, dadurch gekennzeichnet, daß sich zwischen der Bundhülse (18) und dem von dieser durchsetzten Naben- oder Reibringflansch (6 oder 8) ein das wenigstens radiale Spiel zwischen beiden mit Vorspannung überbrückender, elastischer Zentrierung (31) befindet.

14. Bremsscheibe nach Anspruch 13, dadurch gekennzeichnet, daß der Zentrierring (31) in eine Außenringnut (30) der Bundhülse (18) eingreift.

15. Bremsscheibe nach Anspruch 13 oder 14, dadurch gekennzeichnet, daß der Zentrierring (31) aus einem sich bei Erwärmung zersetzendem Werkstoff besteht.
